# EUROPÄISCHE PATENTSCHRIFT

(11) **EP 1 736 342 B1**
(45) Veröffentlichungstag und Bekanntmachung des Hinweises auf die Patenterteilung: **24.08.2011**
(21) Anmeldenummer: 06012826.1
(22) Anmeldetag: 22.06.2006
(51) Int. Cl.: B60J 7/22

(54) **Windschott für ein Cabriolet-Fahrzeug sowie Cabriolet-Fahrzeug mit einem Windschott**
Wind deflector for a convertible vehicle and convertible vehicle with a wind deflector
Déflecteur de vent pour un cabriolet et cabriolet avec un déflecteur de vent

(30) Priorität: 24.06.2005 DE 102005029696
(43) Veröffentlichungstag der Anmeldung: 27.12.2006
(73) Patentinhaber: Wilhelm Karmann GmbH, 49084 Osnabrück (DE)
(72) Erfinder: Thönelt, Ralf, 49143 Bissendorf (DE)
(74) Vertreter: Kronthaler, Schmidt & Coll.

(56) Entgegenhaltungen:
- EP-A- 1 514 714
- DE-A1- 10 134 613
- DE-A1- 10 239 197
- DE-U1- 29 515 190
- GB-A- 2 326 628

## Beschreibung

Die Erfindung betrifft ein Windschott für ein Cabriolet-Fahrzeug mit einem Öffnungen aufweisenden flächigen Gebilde (Rollo) gemäß dem Oberbegriff des Anspruchs 1.

Windschotts für Cabriolet-Fahrzeuge sind allgemein bekannt. Eine Ausführungsform eines Windschotts ist zum Beispiel in der DE 101 62 758 beschrieben. Ein gattungsgemäßes Windschott ist aus der DE 90 05 439 U bekannt. Weitere Ausführungsformen von Windschotts sind aus der DE 40 18 862, der DE 41 19 530, der DE 43 38 102, der DE 44 05 707 sowie der DE 199 02 242 bekannt.

Nachteilig bei dem gattungsbildenden Stand der Technik ist vor allem die im ausgefalteten Zustand begrenzte Steifigkeit der zur Windabweisung vorgesehenen Fläche, also des Rollos.

Der Erfindung liegt daher die Aufgabe zugrunde, ein insbesondere automatisch aufstellbares Windschott anzugeben, das die oben genannten Nachteile vermeidet oder zumindest reduziert.

Diese Aufgabe wird erfindungsgemäß mit den Merkmalen des Anspruchs 1 gelöst. Das Dokument DE 10 134 613 A offenbart ein Windschott mit den Merkmalen des Oberbegriffs des Anspruchs 1. Dazu sind bei einem Windschott für ein Cabriolet-Fahrzeug mit verschwenkbaren, einseitig an einem Rollokasten angelenkten unteren Rahmenteilen zum vertikalen Aufziehen eines zur Fahrtwindabweisung vorgesehenen flächigen Gebildes (Rollo) einseitig an einem Verbindungselement angelenkte obere Rahmenteile vorgesehen, wobei jedes obere Rahmenteil an seinem freien Ende gelenkig mit dem freien Ende jeweils eines unteren Rahmenteils verbunden ist. Die Kombination aus Rollokasten, daran angelenkten unteren Rahmenteilen, mit diesen gelenkig verbundenen oberen Rahmenteilen, die wiederum an das Verbindungselement angelenkt sind, bildet im aufgestellten Zustand eine im wesentlichen rechteckige oder trapezförmige Stützeinrichtung. Durch die spezielle mechanische Konstruktion, insbesondere die Verwendung zweier Rahmenteile, die bei aufgestellter Stützeinrichtung die vertikalen Außenseiten bilden, ergibt sich in Zusammenwirkung mit dem Rollokasten und dem Verbindungselement, die jeweils eine horizontale Außenseite der Stützeinrichtung bilden, eine Scherenmechanik, die sich auch automatisch, also durch motorisches Verschwenken einzelner Elemente der Stützeinrichtung leicht aufstellen lässt und die sich im aufgestellten Zustand durch eine hohe Stabilität auszeichnet.

Vorteilhafte Ausgestaltungen der Erfindung sind Gegenstand der Unteransprüche.

Bevorzugt ist danach dem Rollokasten räumlich zugeordnet eine Mechanik zum Aufstellen des Windschotts - zum Aufstellen der Stützeinrichtung des Windschotts - vorgesehen, die auf zumindest eines der unteren Rahmenteile einwirkt. Besonders bevorzugt handelt es sich bei dieser Mechanik um eine motorisch angetriebene Mechanik. Der Vorteil der Einwirkung der Mechanik speziell auf zumindest eines der unteren Rahmenteile, insbesondere gleichzeitig auf beide unteren Rahmenteile, besteht darin, dass die Mechanik nur einen geringen Weg zurücklegen muss.

Gemäß einer bevorzugten Ausgestaltung dieser Ausführungsform der Erfindung ist vorgesehen, dass die Mechanik zum Aufstellen der Stützeinrichtung des Windschotts eine Antriebsspindel und zumindest einen mittels der Antriebsspindel beweglichen und in einer Führung gehalterten Kulissenstein umfasst, wobei an dem Kulissenstein ein Hebel einseitig angelenkt ist, der an seinem anderen Ende gelenkig mit einem unteren Rahmenteil verbunden ist. Die Rotation einer solchen Antriebsspindel bewirkt eine translatorische Bewegung des Kulissensteins. Über den Hebel ergibt sich aufgrund dieser Bewegung ein Verschwenken des jeweiligen unteren Rahmenteils. Besonders bevorzugt sind zwei derartige Antriebsspindeln vorgesehen, wobei jede Antriebsspindel mittels Kulissenstein und Hebel auf je eines der unteren Rahmenteile einwirkt. Bei zwei Antriebsspindeln werden diese besonders bevorzugt durch ein gemeinsames Aggregat, insbesondere einen sogenannten Rohrmotor, angetrieben. Ein solcher Rohrmotor hat den Vorteil einer im wesentlichen zylinderförmigen Bauform, so dass der Rohrmotor zwischen beiden Antriebsspindeln anordenbar ist, so dass weiter die Drehachse beider Antriebsspindeln und des Rohrmotors parallel oder zumindest im wesentlichen parallel mit einer quer zur Fahrzeuglängsrichtung verlaufenden Achse liegt.

Wenn das oder jedes untere Rahmenteil einen Querschnitt, insbesondere einen U-förmigen Querschnitt, aufweist, der im eingeklappten Zustand der Stützeinrichtung des Windschotts die Aufnahme des jeweils angelenkten oberen Rahmenteils ermöglicht, ergibt sich die Möglichkeit zum besonders Platzsparenden Zusammenlegen der Stützeinrichtung.

Wenn das Rollo ein horizontal ausgerichtetes Versteifungselement aufweist und das Rollo im Bereich dieses Versteifungselements eine Breite, also eine Ausdehnung quer zur Fahrzeuglängsrichtung, aufweist, die beidseitig über eine Verbindungslinie jeweils zwischen den Anlenkungspunkten der oberen Rahmenteile am Verbindungselement und der unteren Rahmenteile am Rollokasten hinausreicht, kommt das Versteifungselement bei ausgezogenem Rollo in seinen Endbereichen mit den beiden vertikalen Abschnitten der Stützeinrichtung, also entweder dem jeweiligen oberen oder unteren Rahmenteil, zur Anlage, so dass ein "Flattern" des Rollos im Fahrtwind erheblich reduziert wird.

Bevorzugt ist die gelenkige Verbindung von unterem und oberem Rahmenteil bei voll ausgeschwenkten unteren Rahmenteilen in eine Übertotpunktlage verschwenkbar. In dieser Lage werden die oberen und unteren Rahmenteile durch eine Federspannung des Rollos, mit der dieses in den Rollokasten aufwickelbar ist, fixiert. Das Rollo ist zu diesem Zweck an seiner Oberkante zumindest mit dem Verbindungselement verbunden. Das Verschwenken der gelenkigen Elemente der Stützeinrichtung in diese Übertotpunktlage führt in aufgestelltem Zustand zu einer weiteren Stabilisierung der rechteckigen oder trapezförmigen Rahmenkontur (der Kontur der Stützeinrichtung).

Zur Fixierung des aufgestellten Windschotts, also insbesondere zur Fixierung der aufgestellten Stützeinrichtung des Windschotts entlang der Fahrzeuglängsrichtung, ist bevorzugt ein Riegelelement vorgesehen, das an einer Außenseite zumindest eines der unteren Rahmenteile angebracht und zum Eingriff in eine korrespondierende Ausnehmung in einem Element der Fahrzeuginnenverkleidung vorgesehen ist.

Besonders bevorzugt ist das Riegelelement zur Betätigung eines fahrzeugseitigen Drehriegels vorgesehen, der bei Betätigung durch das Riegelelement aus der Fahrzeuginnenverkleidung verschwenkbar ist und in verschwenktem Zustand zum Andrücken des Rollos an zumindest eines der Rahmenteile wirksam ist.

Wenn der Rollokasten das Windschott, also die Kombination aus Stützeinrichtung und Rollo, in eingefaltetem Zustand vollständig aufnimmt, ist das Windschott einerseits gegen mechanische Beschädigungen, zum Beispiel durch die Fondpassagiere beim Ein- und Aussteigen, wirksam geschützt. Darüber hinaus lässt sich ein solcher Rollokasten, der in besonders bevorzugter Ausführungsform zum Beispiel durch ein entsprechend gestaltetes Verbindungselement nach Art eines Deckels verschlossen wird, unter optischen Gesichtspunkten wesentlich besser in das Cabriolet-Fahrzeug integrieren, als dies bei einer freiliegenden Mechanik der Fall wäre.

Der Rollokasten ist räumlich der Fondsitzbank des Cabriolet-Fahrzeugs zugeordnet und dabei insbesondere im Bereich einer Vorderkante der Fondsitzbank oder in Fahrzeuglängsrichtung verschieblich unter der Vorderkante der Vordersitzbank oder unterhalb der Fondsitzbank im Bereich einer quer zur Fahrzeuglängsrichtung verlaufenden Trennstelle einer an dieser Trennstelle zweigeteilten Fondsitzbank, wobei zumindest eines der Teile einer solchen Fondsitzbank verschwenkbar ausgebildet ist, angeordnet.

Auch wenn die vorliegende Erfindung vorangehend stets konkret in Bezug auf das erfindungsgemäße Windschott beschrieben wurde, erfasst die Erfindung selbstverständlich auch ein Cabriolet-Fahrzeug mit einem Windschott gemäß der Erfindung oder einer ihrer Ausführungsformen oder Ausgestaltungen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen
- Fig. 1: eine vereinfachte perspektivische Teilansicht eines Innenraums eines Cabriolet-Fahrzeugs mit einem Windschott nach der Erfindung,
- Fig. 2: das erfindungsgemäße Windschott in teilweise aufgestelltem Zustand,
- Fig. 3: das erfindungsgemäße Windschott in aufgestelltem Zustand,
- Fig. 4: einen Längsschnitt durch das Cabriolet-Fahrzeug im Bereich der Hintersitzanlage mit aufgestelltem Windschott,
- Fig. 4a, Fig. 4b: in gleicher Perspektive wie in Fig. 4 eine alternative Anbringungsmöglichkeit des Windschotts,
- Fig. 5a, Fig. 5b: eine vergrößerte Schnittdarstellung des Windschotts in abgelegtem Zustand entlang der Linie A-A in Fig. 1,
- Fig. 6: eine Schnittdarstellung durch einen Teil einer Fahrzeuginnenverkleidung der Hintersitzanlage bei aufgestelltem Windschott und
- Fig. 7a, Fig. 7b: eine weitere Ausführungsform zur Anbringung des Windschotts.

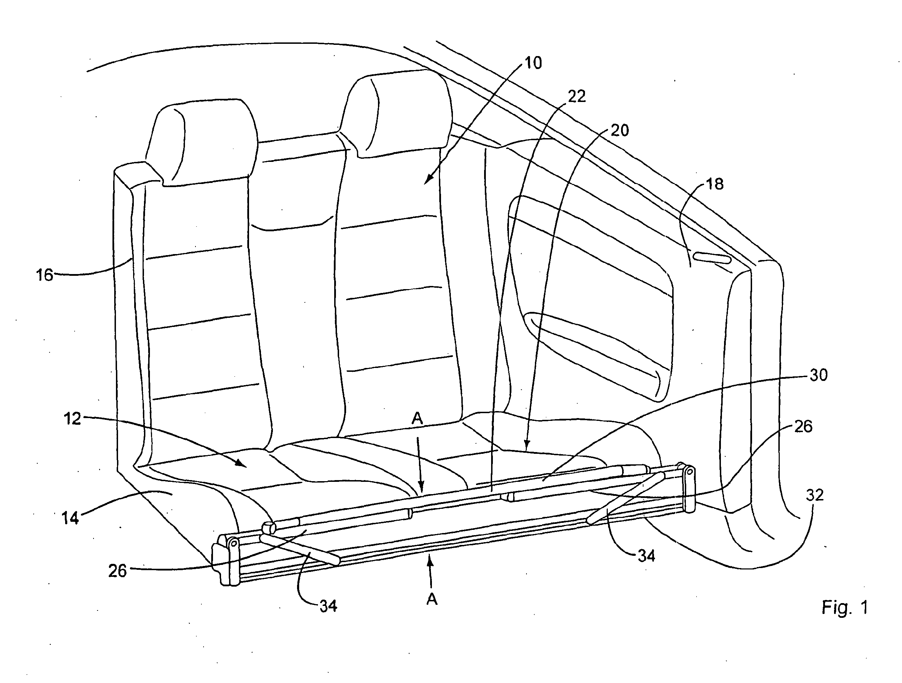

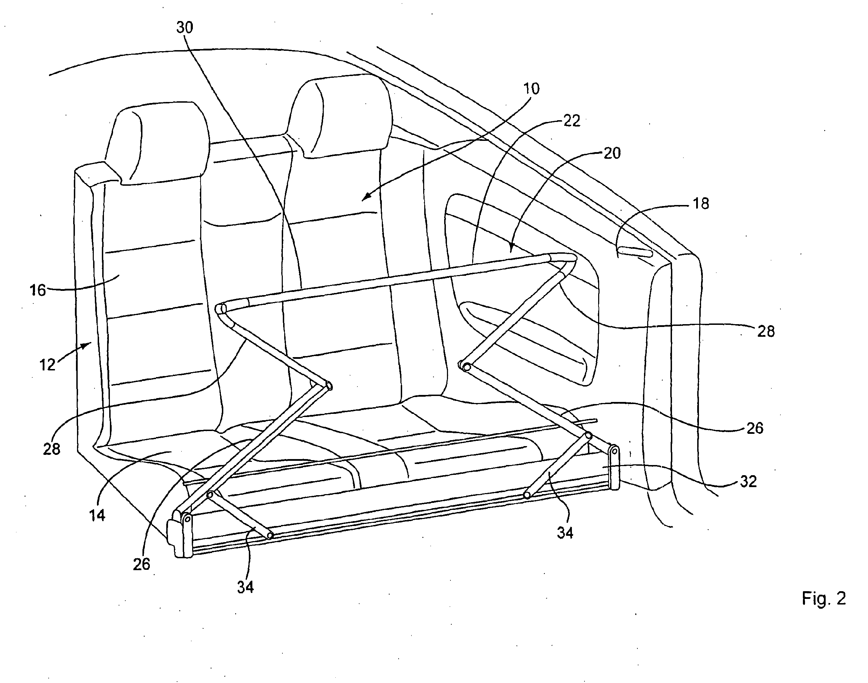

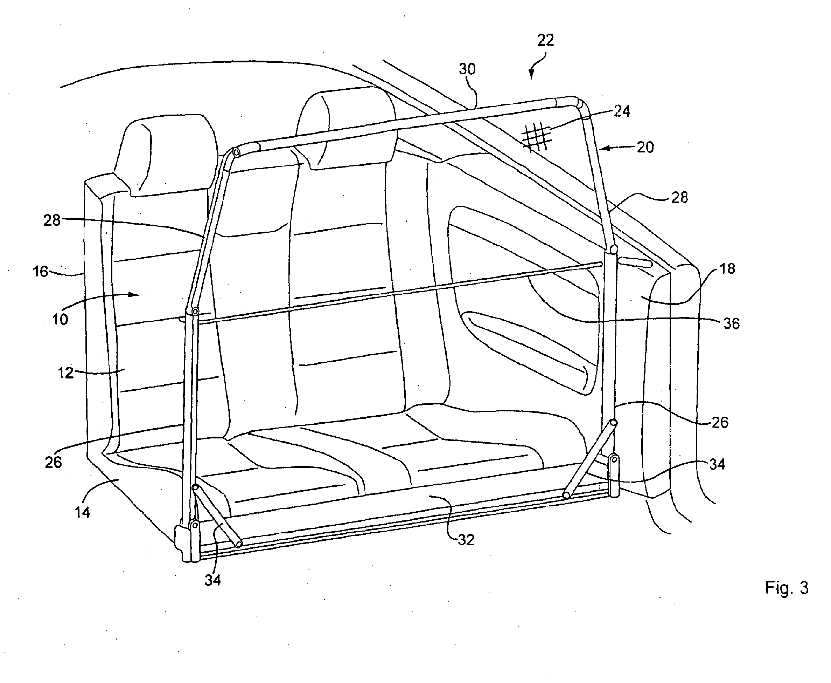

Fig. 1 zeigt eine an sich bekannte sogenannte Hintersitzanlage 10 eines ebenfalls an sich bekannten Fahrzeuginnenraums eines Cabriolet-Fahrzeugs. Die Hintersitzanlage umfasst eine Fondsitzbank 12, welche in der dargestellten Ausführungsform zweiteilig mit einem Sitzpolster 14 und einer Rückenlehne 16 ausgeführt ist. Seitlich wird die Fondsitzbank 12 von einer Fahrzeuginnenverkleidung 18 begrenzt. Bei der in den Figuren dargestellten Ausführungsform befindet sich ein Windschott 20 gemäß der Erfindung, das in Fig. 1 in eingefaltetem und in Fig. 2 besser erkennbar in teilweise aufgestelltem Zustand dargestellt ist, in Fahrzeuglängsrichtung gesehen vor der Fondsitzbank 12. Das Windschott 20 umfasst einen Stützrahmen 22 sowie ein zur Fahrtwindabweisung vorgesehenes, Öffnungen aufweisendes flächiges Gebilde, das im Folgenden kurz als Rollo 24 bezeichnet wird. Die Stützeinrichtung 22 ist im aufgestellten Zustand zur Halterung des Rollos 24 in einer im Wesentlichen vertikalen Position vorgesehen. Die Stützeinrichtung 22 umfasst zwei untere Rahmenteile 26, zwei obere Rahmenteile 28 sowie ein Verbindungselement 30. Als ebenfalls zur Stützeinrichtung 22 gehörig kann ein Rollokasten 32 aufgefasst werden, mit dem die oben beschriebenen Elemente 26, 28, 30 im aufgestellten Zustand einen im Wesentlichen rechteckigen oder trapezförmigen Rahmen bilden (siehe Fig. 3). Die beiden unteren Rahmenteile 26 sind jeweils einseitig im Bereich der äußeren Enden des Rollokastens 32 mit diesem gelenkig verbunden. An den freien Enden der unteren Rahmenteile 26 sind die oberen Rahmenteile 28 einseitig angelenkt. Die oberen Rahmenteile 28 wiederum sind mit ihren freien Enden an den Außenseiten des Verbindungselements 30 angelenkt. Insgesamt ergibt sich damit eine Scherenmechanik, deren Kinematik beim Aufstellen des Windschotts 20, also beim Auffalten der Stützeinrichtung 22, ausgenutzt wird. Dazu sind zwei Hebel 34 vorgesehen, die jeweils gelenkig mit einem der unteren Rahmenteile 26 verbunden sind. Die Hebel 34 sind mittels einer in Fig. 1-Fig. 3 nicht ersichtlichen Mechanik betätigbar, wobei eine Betätigung der Hebel 34 ein Verschwenken der unteren Rahmenteile 26 in Richtung der jeweiligen Fahrzeuginnenverkleidung 18 bewirkt. Jeder der auf der einen Seite gelenkig mit einem der unteren Rahmenteile 26 und auf der anderen Seite in Richtung der Schwenkbewegung des unteren Rahmenteils 26 im Wesentlichen ortsfest an das Verbindungselement 30 angelenkte obere Rahmenteil 28 wird beim Verschwenken des unteren Rahmenteils 26 ebenfalls in Richtung der Fahrzeuginnenverkleidung 18 verschwenkt.

Das Rollo 24 weist ein horizontal ausgerichtetes Versteifungselement 36 auf, das - wie nachfolgend anhand von Fig. 3 erläutert - ein Flattern des Rollos 24 im Fahrtwind vermeidet oder zumindest deutlich reduziert.

Fig. 3 zeigt bei gleicher Perspektive wie in Fig. 1 oder Fig. 2 das aufgestellte Windschott 20. Bei aufgestelltem Windschott 20 sind die unteren Rahmenteile 26 in eine vertikale oder zumindest annähernd vertikale Position verschwenkt. Insgesamt bildet die Stützeinrichtung 22 damit einen Rahmen, der bis zur Höhe der Oberkante der unteren Rahmenteile 26 rechteckig oder zumindest annähernd rechteckig und ausgehend von der Oberkante der unteren Rahmenteile 26 im Bereich der oberen Rahmenteile 28 trapezförmig ist. Die Gesamtkontur der Stützeinrichtung 22 wird im Folgenden ebenfalls als trapezförmig bezeichnet.

Das Versteifungselement 36 erstreckt sich in horizontaler Richtung über die gesamte Breite des Rollos 24, dessen netzartige Struktur in Fig. 3 lediglich punktuell schematisch angedeutet ist. Neben der Spannung des Rollos 24 in vertikaler Richtung, die sich vor allem bei einer an dem Verbindungselement 30 befestigten Vorderkante des Rollos 24 aufgrund einer Federvorspannung ergibt, unter der das Rollo 24 aus dem Rollokasten 32 herausgezogen wird, ist das Versteifungselement 36 zum Aufspannen des Rollos 24 in horizontaler Richtung wirksam. Darüber hinaus verhindert das Versteifungselement 36 ein Flattern des Rollos 24 im Fahrtwind, weil das Versteifungselement 36 eine Breite aufweist, die beidseitig über eine Verbindungslinie jeweils zwischen den Anlenkungspunkten der beiden oberen Rahmenteile 28 am Verbindungselement 30 und der unteren Rahmenteile 26 am Rollokasten 32 hinausreicht. Aufgrund dieser Längserstreckung des Versteifungselements 36 ergibt sich die Möglichkeit, dass das Versteifungselement 36 im Bereich seiner Endpunkte an den vertikalen Abschnitten der Stützkonstruktion 22, in der dargestellten Ausführungsform an den unteren Rahmenteilen 26, zur Anlage kommt. In der dargestellten Ausführungsform befindet sich das Rollo 24 in Fahrtrichtung gesehen hinter der Stützeinrichtung 22, so dass durch den Fahrtwind hervorgerufene Luftverwirbelungen das Rollo 24 in Fahrtrichtung gegen die Stützeinrichtung 22 drücken. Dadurch ergibt sich ein Kontakt des Versteifungselements 36 mit den vertikalen Abschnitten der Stützeinrichtung 22.

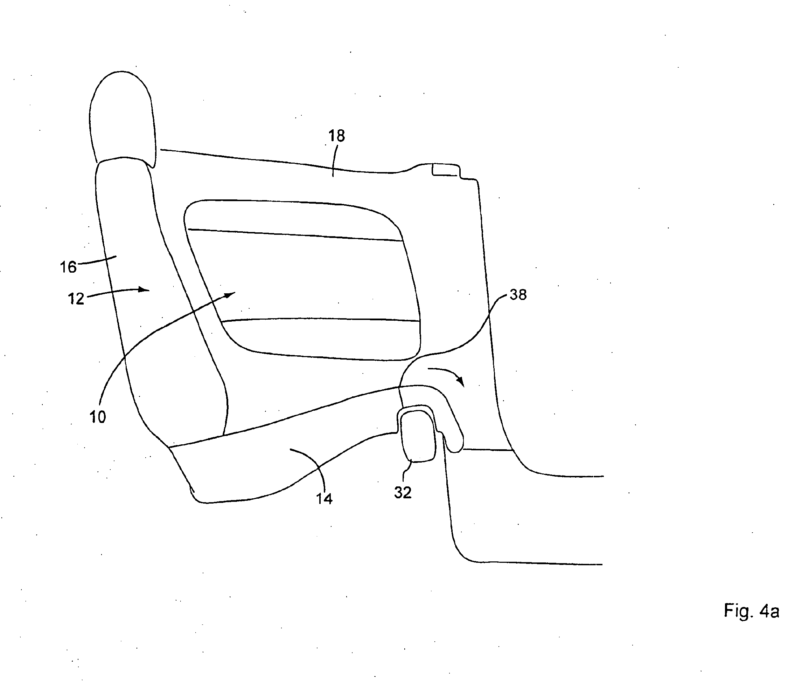

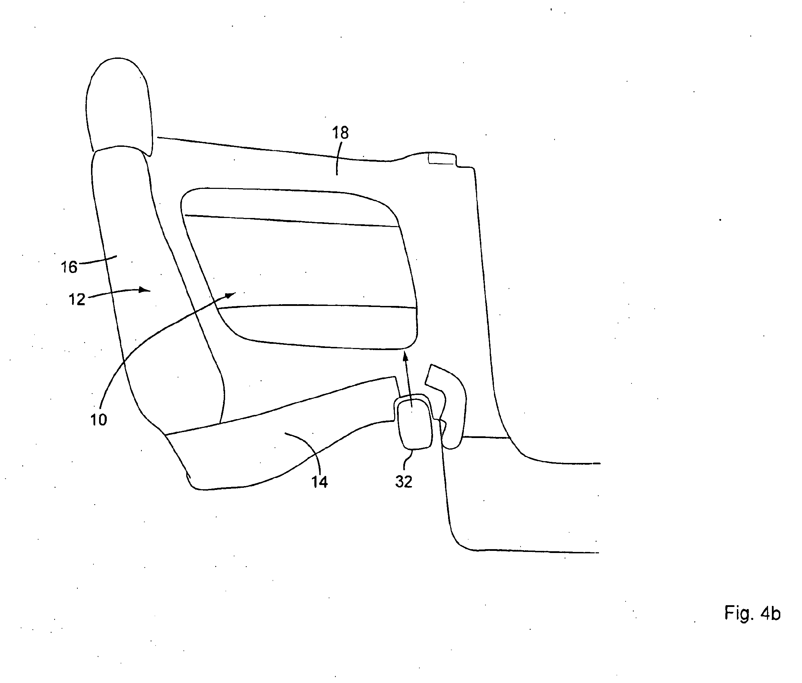

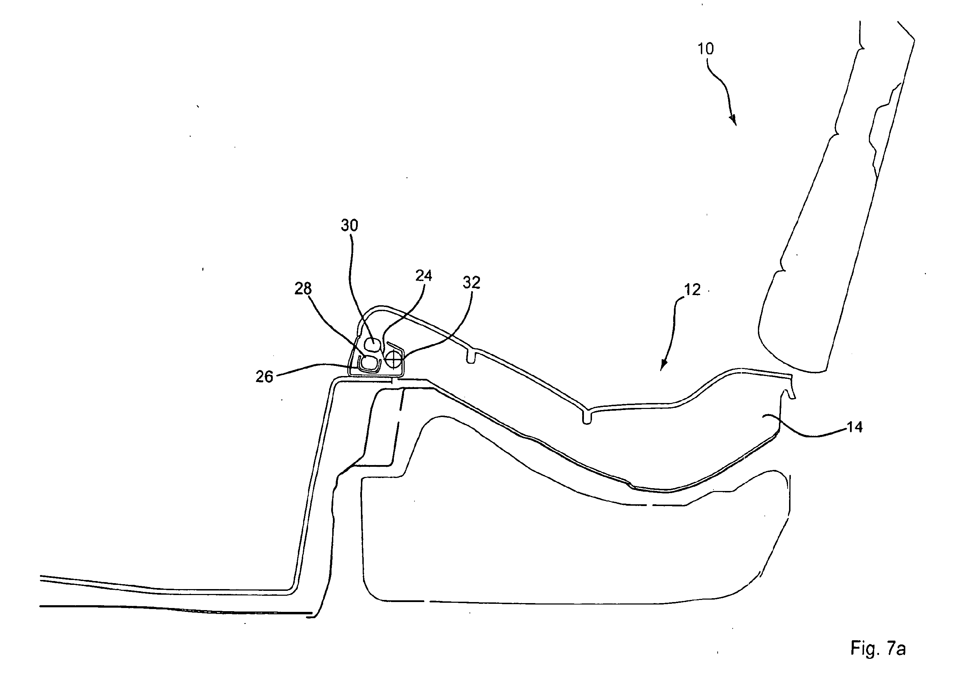

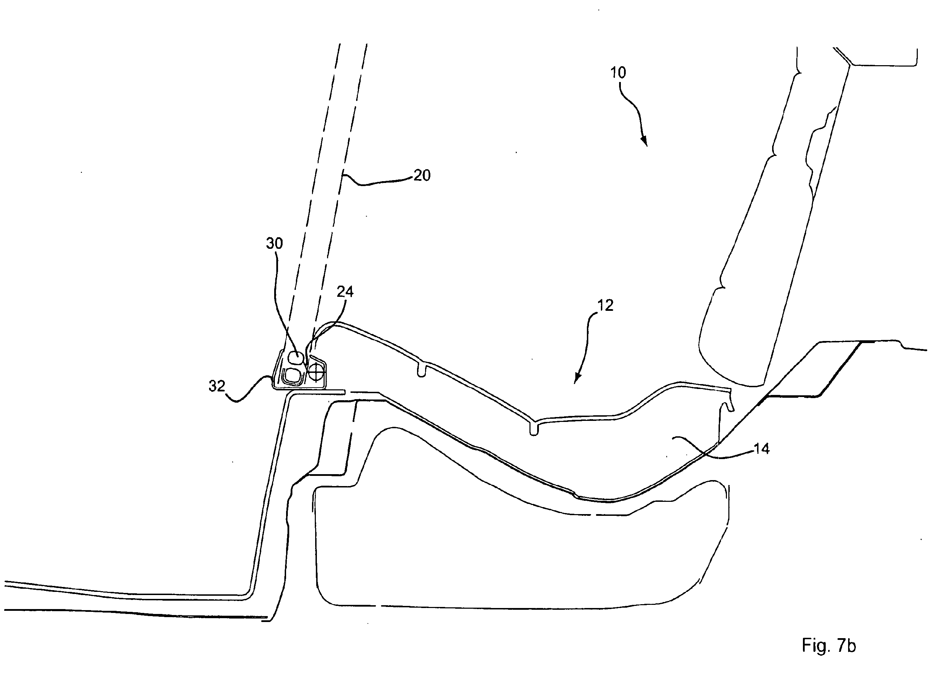

Fig. 4 zeigt die Hintersitzanlage 10 in einem Vertikalschnitt in Fahrzeuglängsrichtung. Dargestellt ist der der sichtbaren Fahrzeuginnenverkleidung 18 zugewandte vertikale Abschnitt der Stützkonstruktion 22 mit dem jeweiligen unteren und oberen Rahmenteil 26, 28. Wie sich in dieser Darstellung besonders gut erkennen lässt, ist das Windschott 20 nicht notwendig exakt vertikal ausgerichtet, sondern kann leicht gegen die Fahrtrichtung geneigt sein. In der dargestellten Ausführungsform ist der Rollokasten 32, der bei abgelegtem Windschott 20 zu dessen Aufnahme vorgesehen ist, im Bereich einer Vorderkante der Fondsitzbank 14 angeordnet. Gleichwertige Alternativen zur Anbringung des Rollokastens 32 bestehen darin, den Rollokasten 32 unterhalb der Fondsitzbank 14 vorzusehen, wobei in einer ersten Ausführungsform der Rollokasten 32 vor Aufstellen des Windschotts 20 aus seiner Position unter der Fondsitzbank in Fahrtrichtung verschoben wird, bis ein Aufstellen des Windschotts 20 vor der Vorderkante der Fondsitzbank 14 möglich wird (siehe Fig. 7a, 7b). Alternativ besteht die Möglichkeit, bei einem unter der Fondsitzbank 14 angeordneten Rollokasten 32 (siehe Fig. 4a und Fig. 4b) die Fondsitzbank 14 entlang einer quer zur Fahrzeuglängsrichtung verlaufenden Trennlinie 38 trennbar auszuführen, wobei zumindest eines der Teile der Fondsitzbank 14, vorzugsweise der Bereich mit der Vorderkante der Fondsitzbank 14 verschwenkbar ausgebildet ist, so dass zum Aufstellen des Windschotts 20 oder beim Aufstellen des Windschotts 20 der verschwenkbare Teil der Fondsitzbank 14 ebenfalls verschwenkt wird.

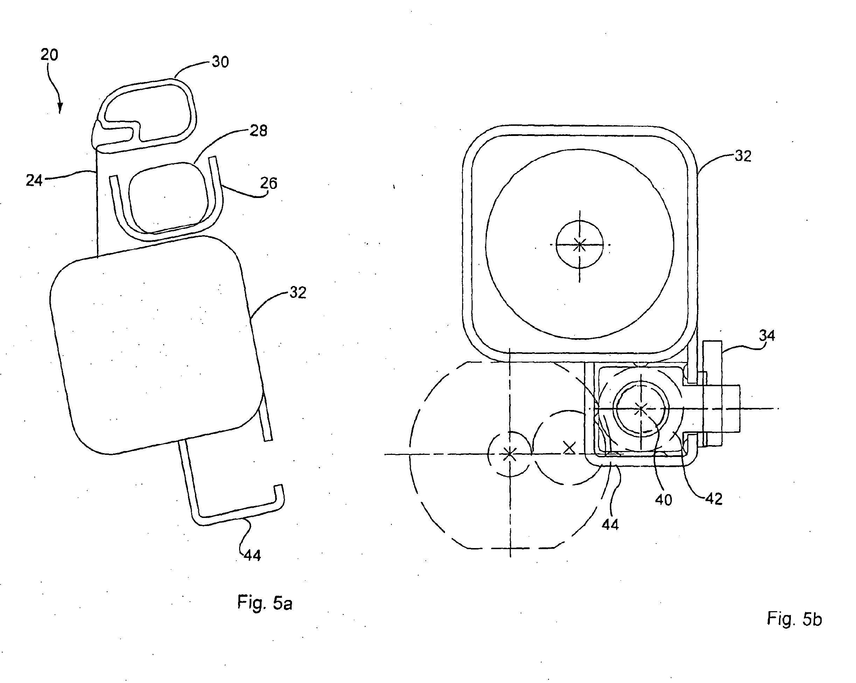

Fig. 5a zeigt in vergrößerter Darstellung einen Querschnitt durch das abgelegte Windschott 20 mit dem Rollokasten 32. In dieser Darstellung ist erkennbar, dass das Rollo 24 an seiner Außenkante mit dem Verbindungselement 30 verbunden ist. Beim Aufstellen des Windschotts 20 und dem damit bewirkten Anheben des Verbindungselements 30 wird das Rollo 24 also aus dem Rollokasten 32 abgezogen. Beim Ablegen des Windschotts 20 wird das Rollo 24, das im Rollokasten 32 in an sich bekannter Weise auf einer unter Federspannung stehenden Walze aufgerollt ist (in Fig. 5b im Innern des Rollokasten 32 schematisch dargestellt), wieder in den Rollokasten 32 eingezogen. Des Weiteren ist in Fig. 5 ersichtlich, dass das untere Rahmenteil 26 einen Querschnitt aufweist, der im eingeklappten Zustand die Aufnahme des angelenkten oberen Rahmenteils 28 ermöglicht.

Bei der dargestellten Ausführungsform handelt es sich bei dem Querschnitt des unteren Rahmenteils 26 um einen U-förmigen Querschnitt.

Fig. 5b zeigt eine dem Rollokasten 32 zugeordnete Mechanik zum Aufstellen der Stützeinrichtung 22, die eine Antriebsspindel 40 und einen darauf geführten Kulissenstein 42 umfasst, wobei Antriebsspindel 40 und Kulissenstein 42 in einer durch ein geschlitztes Vierkantrohr gebildeten Führung 44 gehaltert sind und wobei der Kulissenstein einen Zapfen aufweist, der zum Anlenken eines der Hebel 34 vorgesehen ist und sich aus dem Schlitz in der Führung 44 erhebt. Eine Rotation der Antriebsspindel 40 wird in an sich bekannter Weise in eine translatorische Bewegung des Kulissensteins 42 umgesetzt, so dass eine Bewegung des Kulissensteins 42 über den Hebel 34 ein Verschwenken des jeweiligen unteren Rahmenteils 26 und damit insgesamt ein Aufrichten der Stützvorrichtung 22 bewirkt.

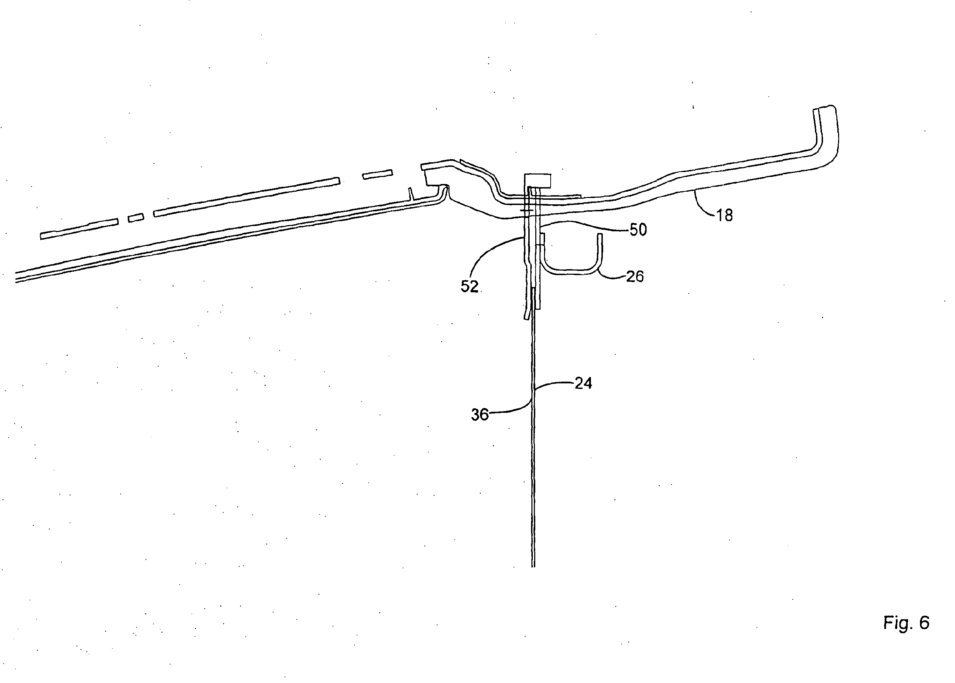

Fig. 6 zeigt eine weitere Ausgestaltung der bevorzugten Ausführungsform, wobei an einer Außenseite zumindest eines der unteren Rahmenteile 26, bevorzugt an beiden unteren Rahmenteilen 26, ein Riegelelement 50 vorgesehen, das bei aufgestellter Stützeinrichtung 22 in eine dafür vorgesehene Ausnehmung in der Fahrzeuginnenverkleidung 18 eingreift. Mit dem Eingriff des Riegelelements 50 in die Ausnehmung in der Fahrzeuginnenverkleidung 18 ist die Stützeinrichtung 22 in Fahrzeuglängsrichtung fixiert, so dass auch bei erheblichem Winddruck eine Bewegung des Windschotts 20 unterbunden oder zumindest weitestgehend reduziert wird. In der in Fig. 6 dargestellten bevorzugten Ausführungsform ist ein durch das Riegelelement 50 betätigbarer Drehriegel 52 gezeigt, der bei Betätigung durch das Riegelelement 50 aus der Fahrzeuginnenverkleidung 18 verschwenkbar ist und in verschwenktem Zustand zum Andrücken des Rollos 24, besonders bevorzugt zum Andrücken des Versteifungselements 36 im Rollo 24, an die vertikalen Abschnitte der Stützeinrichtung 22, in der dargestellten Ausführungsform also an die unteren Rahmenteile 26, wirksam ist.

Fig. 7a, 7b zeigen die bereits erwähnte Ausführungsform zur Anbringung des Rollokastens 32, bei der dieser unterhalb der Fondsitzbank 14 angeordnet ist und vor Aufstellen des Windschotts 20 aus seiner Position unter der Fondsitzbank 14 in Fahrtrichtung verschoben wird, bis ein Aufstellen des Windschotts 20 vor der Vorderkante der Fondsitzbank 14 möglich wird. Fig. 7b zeigt dazu mit den gestrichelten Linien die Position des aufgestellten Windschotts 20 obwohl in der Darstellung in Fig. 7b die Elemente des Windschotts als noch im Rollokasten 32 befindlich gezeigt sind. Zur Verschiebung des Rollokastens 32 aus seiner Position unter der Fondsitzbank 14 in eine Position die ein Aufstellen des Windschotts 20 erlaubt (Fig. 7b) ist ein motorischer Antrieb des Rollokastens 32 möglich, etwa mit einer horizontal oder im Wesentlichen horizontal ausgerichteten Spindel (nicht dargestellt). Alternativ kommt eine Verschiebbarkeit des Rollokastens 32 mit hydraulischen oder pneumatischen Mitteln in Betracht. Die Spindel oder, bei einem hydraulischen/pneumatischen Antrieb, die Zylinder dienen vorzugsweise nicht nur zur Translation des Rollokastens 32 sondern bewirken gleichzeitig auch eine Wegbegrenzung. Zur Verbesserung der Führung und oder Halterung des Rollokastens 32 bei der Bewegung bzw. im ausgefahrenen Zustand kann vorgesehen sein, dass der Rollokasten 32 auf nicht dargestellten Führungselementen, z.B. Führungsschienen oder dergleichen, geführt wird.

Zusammenfassend lässt sich die vorliegende Erfindung damit kurz wie folgt beschreiben: Es wird ein Windschott 20 für ein Cabriolet-Fahrzeug mit verschwenkbaren, einseitig an einem Rollokasten 32 angelenkten unteren Rahmenteilen 26 zum vertikalen Aufziehen eines zur Fahrtwindabweisung vorgesehenen Rollos 24, angegeben, mit einseitig an einem Verbindungselement 30 angelenkten oberen Rahmenteilen 28, wobei jedes obere Rahmenteil 28 an seinem freien Ende gelenkig mit dem freien Ende jeweils eines unteren Rahmenteils 26 verbunden ist.

### BEZUGSZEICHENLISTE

- 10: Hintersitzanlage
- 12: Fondsitzbank
- 14: Sitzpolster
- 16: Rückenlehne
- 18: Fahrzeuginnenverkleidung
- 20: Windschott
- 22: Stützrahmen
- 24: Rollo
- 26: untere Rahmenteile
- 28: obere Rahmenteile
- 30: Verbindungselement
- 32: Rollokasten
- 34: Hebel
- 36: Versteifungselement
- 38: Trennlinie
- 40: Antriebsspindel
- 42: Kulissenstein
- 44: Führung
- 50: Riegelelement
- 52: Drehriegel

## Patentansprüche

1. Windschott für ein Cabriolet-Fahrzeug mit verschwenkbaren, einseitig an einem Rollokasten (32) angelenkten unteren Rahmenteilen (26) zum vertikalen Aufziehen eines zur Fahrtwindabweisung vorgesehenen Rollos (24)
**gekennzeichnet durch** einseitig an einem Verbindungselement (30) angelenkte obere Rahmenteile (28), wobei jedes obere Rahmenteil (28) an seinem freien Ende gelenkig mit dem freien Ende jeweils eines unteren Rahmenteils (26) verbunden ist.

2. Windschott nach Anspruch 1,
wobei dem Rollokasten (32) räumlich zugeordnet eine Mechanik zum Aufstellen des Windschotts (20) vorgesehen ist, die auf zumindest eines der unteren Rahmenteile (26) einwirkt.

3. Windschott nach Anspruch 2,
wobei die Mechanik zum Aufstellen des Windschotts (20) eine Antriebsspindel (40) und zumindest einen mittels der Antriebsspindel (40) beweglichen und in einer Führung (44) gehalterten Kulissenstein (42) umfasst, wobei an dem Kulissenstein (42) ein Hebel (34) einseitig angelenkt ist, der an seinem anderen Ende gelenkig mit einem unteren Rahmenteil (26) verbunden ist.

4. Windschott nach einem der vorangehenden Ansprüche,
wobei das oder jedes untere Rahmenteil (26) einen Querschnitt, insbesondere einen U-förmigen Querschnitt, aufweist, der im eingeklappten Zustand einer aus unteren und oberen Rahmenteilen sowie Verbindungselement gebildeten Stützeinrichtung (22) die Aufnahme des jeweils angelenkten oberen Rahmenteils (28) ermöglicht.

5. Windschott nach einem der vorangehenden Ansprüche,
wobei das Rollo (24) ein horizontal ausgerichtetes Versteifungselement (36) aufweist und wobei das Rollo (24) im Bereich des versteifungselements (36) eine Breite aufweist, die beidseitig über eine Verbindungslinie jeweils zwischen den Anlenkungspunkten der oberen Rahmenteile am Verbindungselement und der unteren Rahmenteile am Rollokasten hinausreicht.

6. Windschott nach einem der vorangehenden Arisprüche,
wobei die gelenkige Verbindung von unterem und oberem Rahmenteil bei voll ausgeschwenkten unteren Rahmenteilen in einer Übertotpunktlage verschwenkbar sind und wobei einer Federspannung des Rollos, mit der dieses in den Rollokasten aufwickelbar ist, zur Fixierung die unteren und oberen Rahmenteile in dieser Lage wirksam ist.

7. Windschott nach einem der vorangehenden Ansprüche, mit einem an einer Außenseite zumindest eines der unteren Rahmenteile (26) und zum Eingriff in eine korrespondierende Ausnehmung in einem Element der Fahrzeuginnenverkleidung (18) vorgesehenen Riegelelement (50), das bei aufgestelltem Windschott zu dessen Fixierung entlang der Fahrzeuglängsrichtung wirksam ist.

8. Windschott nach Anspruch 7,
wobei das Riegelelement (50) zur Betätigung eines fahrzeugseitigen Drehriegels (52) vorgesehen ist, der bei Betätigung durch das.Riegelelement (50) aus der Fahrzeuginnenverkleidung (18) verschwenkbar ist und in verschwenktem Zustand zum Andrücken des Rollos (24) an zumindest eines der Rahmenteile (26, 28) wirksam ist.

9. Windschott nach einem der vorangehenden Ansprüche, mit einem zu dessen vollständiger Aufnahme vorgesehenen Rollokasten.

10. Cabriolet-Fahrzeug mit einem Windschott (20) nach einem oder mehreren der vorangehenden Ansprüche.

11. Cabriolet-Fahrzeug nach Anspruch 10
wobei der Rollokasten (32) räumlich der Fondsitzbank (12) des Fahrzeugs zugeordnet ist, insbesondere
im Bereich einer Vorderkante der Fondsitzbank (12) oder
in Fahrzeuglängsrichtung versenkbar unter der Vorderkante der Fondsitzbank oder
unterhalb der Fondsitzbank (12) im Bereich einer quer zur Fahrzeuglängsrichtung verlaufenden Trennstelle einer an dieser Trennstelle zweigeteilten Fondsitzbank (12), wobei zumindest eines der Teile der Fondsitzbank (12) verschwenkbar ausgebildet ist.

## Claims

1. A wind deflector for a cabriolet vehicle with pivotable lower frame parts (26) articulated on one side on a blind case (32) for the vertical raising of a blind (24) provided for deflecting airflow
**characterized by**
upper frame parts (28) articulated on one side on a connecting element (30), wherein each upper frame part (28) is articulated at its free end with the free end respectively of a lower frame part (26).

2. The wind deflector according to claim 1,
wherein a mechanism is provided, associated spatially with the blind case (32), for positioning the wind deflector (20), which mechanism acts on at least one of the lower frame parts (26).

3. The wind deflector according to claim 2,
wherein the mechanism for positioning the wind deflector (20) comprises a drive spindle (40) and at least one sliding block (42) movable by means of the driving spindle (40) and mounted in a guide (44), wherein a lever (34) is articulated on one side on the sliding block (42), which is articulated at its other end with a lower frame part (26).

4. The wind deflector according to one of the preceding claims,
wherein the or each lower frame part (26) has a cross-section, in particular a U-shaped cross-section, which in the folded-in state of a support arrangement (22), formed of lower and upper frame parts and connecting element, makes possible the mounting of the respectively articulated upper frame part (28).

5. The wind deflector according to one of the preceding claims,
wherein the blind (24) has a horizontally aligned reinforcing element (36), and wherein in the region of the reinforcing element (36) the blind (24) has a width which extends out on both sides over a connecting line respectively between the articulation points of the upper frame parts on the connecting element and the lower frame parts on the blind case.

6. The wind deflector according to one of the preceding claims,
wherein the articulated connections of lower and upper frame part are pivotable in an over dead centre position at fully swung out condition of the lower frame parts, and wherein a spring tension of the blind, by which the latter is able to be wound into the blind case, is effective for fixing the lower and upper frame parts in this position.

7. The wind deflector according to one of the preceding claims, with a bolt element (50) provided on an outer side at least of one of the lower frame parts (26) and for engagement into a corresponding recess in an element of the vehicle interior lining (18), which is effective for fixing the wind deflector along the longitudinal direction of the vehicle in the deployed condition of the wind deflector.

8. The wind deflector according to claim 7,
wherein the bolt element (50) is provided for actuation of a turning bolt (52) on the vehicle side, which, on actuation by the bolt element (50), is pivotable out of the vehicle interior lining (18), and, in the pivoted state, is effective for pressing the blind (24) against at least one of the frame parts (26, 28).

9. The wind deflector according to one of the preceding claims, with a blind case provided for its complete accommodation.

10. A cabriolet vehicle with a wind deflector (20) according to one or more of the preceding claims.

11. The cabriolet vehicle according to claim 10, wherein the blind case (32) is associated spatially with the rear seat bench (12) of the vehicle,
in particular
in the region of a front edge of the rear seat bench (12) or
able to disappear in the longitudinal direction of the vehicle beneath the front edge of the rear seat bench or
beneath the rear seat bench (12) in the region of a dividing point, running transversely to the longitudinal direction of the vehicle, of a rear seat bench (12), which rear seat bench is divided in two parts at this dividing point, wherein at least one of the parts of the rear seat bench (12) is constructed so as to be pivotable.

## Revendications

1. Coupe-vent pour un cabriolet doté de parties de cadre (26) inférieures, basculantes, articulées par un côté sur un caisson de store (32) pour le relèvement vertical d'un store (24) prévu pour la protection contre le vent relatif, **caractérisé par**
des parties de cadre (28) supérieures, articulées par un côté sur un élément de liaison (30), chaque partie de cadre (28) supérieure étant reliée sur son extrémité libre de façon articulée à l'extrémité libre de respectivement une partie de cadre (26) inférieure.

2. Coupe-vent selon la revendication 1,
un mécanisme pour la mise en place du coupe-vent (20), qui agit sur au moins l'une des parties de cadre (26) inférieures, étant prévu et attribué dans l'espace au caisson de store (32).

3. Coupe-vent selon la revendication 2,
le mécanisme pour la mise en place du coupe-vent (20) comprenant une broche d'entraînement (40) et au moins un coulisseau (42) mobile au moyen de la broche d'entraînement (40) et maintenu dans un guide (44), un levier (34) étant articulé par un côté sur le coulisseau (42), lequel levier est relié par son autre extrémité de façon articulée à une partie de cadre (26) inférieure.

4. Coupe-vent selon l'une quelconque des revendications précédentes, la ou chaque partie de cadre (26) inférieure présentant une section, en particulier une section en U, qui, lorsqu'un système de soutien (22), formé de parties de cadre inférieures et supérieures et d'un élément de liaison, est dans l'état replié, permet le logement de la partie de cadre (28) supérieure respectivement articulée.

5. Coupe-vent selon l'une quelconque des revendications précédentes, le store (24) présentant un élément de renfort (36) orienté horizontalement et le store (24) présentant dans la zone de l'élément de renfort (36) une largeur qui dépasse des deux côtés d'une ligne de liaison respectivement entre les points d'articulation des parties de cadre supérieures sur l'élément de liaison et des parties de cadre inférieures sur le caisson de store.

6. Coupe-vent selon l'une quelconque des revendications précédentes, la liaison articulée de la partie de cadre inférieure et de la partie de cadre supérieure pouvant basculer dans une position de dépassement de point mort lorsque les parties de cadre inférieures sont complètement basculées vers l'extérieur et une tension de ressort du store, avec laquelle ce store peut être enroulé dans le caisson de store, étant efficace pour fixer les parties de cadre inférieures et supérieures dans cette position.

7. Coupe-vent selon l'une quelconque des revendications précédentes, comprenant un élément de verrou (50) prévu sur un côté extérieur d'au moins l'une des parties de cadre (26) inférieures et pour l'engagement dans un évidement correspondant dans un élément de l'habillage intérieur de véhicule (18), lequel élément est efficace le long de la direction longitudinale de véhicule, lorsque le coupe-vent est installé, pour sa fixation.

8. Coupe-vent selon la revendication 7,
l'élément de verrou (50) étant prévu pour l'actionnement d'un verrou rotatif (52) côté véhicule, qui, en cas d'actionnement par l'élément de verrou (50), peut basculer à partir de l'habillage intérieur du véhicule (18) et, dans l'état basculé, est efficace pour appuyer le store (24) sur au moins l'une des parties de cadre (26, 28).

9. Coupe-vent selon l'une quelconque des revendications précédentes, comprenant un caisson de store prévu pour son logement complet.

10. Cabriolet doté d'un coupe-vent (20) selon l'une quelconque ou plusieurs des revendications précédentes.

11. Cabriolet selon la revendication 10, le caisson de store (32) étant attribué dans l'espace à la banquette arrière (12) du véhicule, en particulier dans la zone d'une arête avant de la banquette arrière (12) ou pouvant être abaissé dans le sens longitudinal du véhicule sous l'arête avant de la banquette arrière ou
au-dessous de la banquette arrière (12) dans la zone d'un point de séparation, agencé transversalement à la direction longitudinale du véhicule, d'une banquette arrière (12) divisée en deux en ce point de séparation, au moins l'une des parties de la banquette arrière (12) étant conçue de façon basculante.
